# EUROPEAN PATENT APPLICATION

(11) **EP 3 196 115 A1**
(43) Date of publication of application: **26.07.2017**
(21) Application number: 16151824.6
(22) Date of filing: 19.01.2016
(51) Int. Cl.: B63B 35/44, F16L 1/15

(54) **WATER INTAKE RISER FOR A FLOATING PLANT**

(71) Applicant: Shell Internationale Research Maatschappij B.V., 2596 HR Den Haag (NL)
(72) Inventor: VAN TOL, Ronald Theodor, 1031 HW Amsterdam (NL); VAN KESSEL, Johannes Lambertus Franciscus, 2288 GS Rijswijk (NL); FLETCHER, Sean Francis Vockings, 92400 Courbevoie, Paris (FR)
(74) Representative: Matthezing, Robert Maarten

(57) **Abstract**

The present invention provides a floating plant (1) at least comprising a floating body (2) with a plant (3) arranged thereon and a water intake riser (7) for providing water to the plant (3),
wherein the water intake riser (7) is at least partially coated on the inside with an anti-fouling coating (7B).

## Description

The present invention relates to a floating plant at least comprising a floating body with a plant arranged thereon and a water intake riser for providing water to the plant.

Floating plants are known in the art.

As an example, WO0221060 discloses a floating plant for liquefying natural gas (an 'FLNG plant') comprising a barge with a liquefaction plant arranged thereon, the liquefaction plant including a heat exchanger in which natural gas can be cooled using seawater and a water intake riser for providing seawater to be used in the heat exchanger.

As a further example, WO02102653 discloses a seawater intake riser system on a Floating Production Storage and Offloading ('FPSO') vessel.

A problem of the use of water intake risers is the occurrence of fouling. The fouling on *the outside* of boat hulls and other objects immersed in water is a well-known problem. Fouling is a term used to describe the damage caused by the growth of certain marine organisms such as barnacles, molluscs, algae, etc.

To prevent the fouling *on the inside* of the water intake risers, typically use is made of hypochlorite injection at the bottom of the water intake riser (i.e. the point where during use the water enters the water intake riser). The use of such a hypochlorite system in connection with a water intake riser of a floating plant is for example described on page 6, lines 6-12 of the above-mentioned WO02102653.

A disadvantage of the use of hypochlorite injection for preventing marine fouling is that the mounting of a hypochlorite injection system at the bottom of the water intake riser is technically challenging. Also, in particular in case of a floating plant having a significant size (such as an FLNG plant or a FPSO vessel), large amounts of hypochlorite may be needed resulting in high costs.

It is an object of the present invention to overcome or minimize the above problem.

It is a further object of the present invention to provide an alternative solution for preventing fouling on the inside of water intake risers as used in a floating plant.

One or more of the above or other objects can be achieved by providing a floating plant at least comprising a floating body with a plant arranged thereon, and a water intake riser for providing water to the plant,
wherein the water intake riser is at least partially coated on the inside with an anti-fouling coating.

It has surprisingly been found according to the present invention that the use of an anti-fouling coating on the inside of a water intake riser avoids the need for a hypochlorite injection system as typically used in an FLNG or FPSO plant.

An important advantage of the use of the anti-fouling coating according to the present invention is that it significantly reduces the costs as associated with the mounting, installation, operation and maintenance of the hypochlorite injection system. Further, the use of the anti-fouling coating results in a lower technical risk (as hypochlorite injection systems are relatively sensitive). Also, the expected lifetime of the anti-fouling coating according to the present invention is relatively long.

In this respect it is noted that Fig. 2 of US4428989 discloses the use of a gel coat (comprising a cured resin formed from an epoxy resin co-reacted with an epoxidized polyol and a curing agent, wherein the cured resin contains copper flakes) on the inside of a 6-foot diameter utility cooling water tunnel formed form concrete. However, US4428989 does not relate to a floating plant.

The person skilled in the art will readily understand that the floating plant according to the present invention is not limited in any way. As the person skilled in the art is familiar with floating plants this is not further discussed here in detail. Preferred examples of floating plants are the FLNG plant as described in WO0221060 and the FPSO as described in WO02102653. The floating body of the floating plant is also not particularly limited and may comprise a ship, barge, a floating platform or the like. Typically, the floating body will have a significant size such as longer than 100 m, preferably longer than 200 m.

Preferably, the plant is a liquefaction plant for liquefying natural gas. Such a liquefaction plant typically comprises an inlet for natural gas, a container for storing and discharging liquefied natural gas ('LNG'), and one or more heat exchangers in which natural gas can be cooled by indirect heat exchange using water, in particular seawater. Other cooling systems (involving refrigerant circuits) may be present in addition as well.

Preferably, the plant includes a heat exchanger in which a stream can be cooled using water and wherein the water intake riser can provide water to be used in the heat exchanger. Preferably, in particular in case of an FLNG plant, the stream to be cooled is natural gas. Further it is preferred that seawater is used for the cooling in the heat exchanger.

The water intake riser provides the water, in particular seawater, to be provided to the plant. In case the water is to be used in a heat exchanger the water, after being obtained using the water intake riser, may be stored in a water reservoir first, before being supplied to the heat exchanger via a supply conduit. The water may be filtered before supplying to the heat exchanger.

The water intake riser as used according to the present invention is not limited in any way. Typical examples of suitable materials for the water intake riser are (carbon) steel or a composite material based on polymers (optionally containing fibres). The water intake risers may comprise one or more layers consisting of the same of different materials and may be provided with one or more liners or coatings (both on the internal and external surface).

Preferably, during use (i.e. liquefaction in the case of an FLNG plant), the water intake riser is suspending from the floating body (e.g. into the sea), preferably substantially perpendicular.

Further it is preferred that the water intake riser comprises one or more elongated tubes. Typically, the water intake riser is at least 20 m long, preferably at least 50 m, more preferably at least 100 m. To suppress vibrations due to the water flowing around the water intake riser, the water intake riser (or the one or more elongated tubes forming the riser) may be provided with vibration suppressors.

As mentioned above, the water intake riser as used according to the present invention is at least partially coated on the inside with an anti-fouling coating.

The anti-fouling coating as used according to the present invention is not particularly limited. As the person skilled in the art is familiar with anti-fouling coatings, this is not further discussed here in detail. Anti-fouling coatings are for example described in M. Léjars et al., "Fouling Release Coatings: A Nontoxic Alternative to Biocidal Antifouling Coatings", Chem. Rev. 2012, 112, 4347-4390. Preferably, the anti-fouling coating comprises a binder provided with granules having an anti-fouling effect.

Preferably, the anti-fouling coating is non-toxic. It is especially preferred that the anti-fouling coating comprises copper, in particular a copper-nickel alloy. Suitable non-toxic anti-fouling coatings are or can be made using: Cuprotect® (a copper-nickel alloy obtainable from Ecosea Ltd. (Southampton, UK); Balmoral CuNiClad (obtainable from Balmoral (Aberdeen, UK)); and CuNiGuard® (obtainable from Marine Technology Ltd (Colehill, Wimborne (Dorset), UK) ) .

In another aspect, the present invention provides a water intake riser that is at least partially coated on the inside with an anti-fouling coating, as described in relation to the floating plant as described herein.

Hereinafter the present invention will be further illustrated by the following non-limiting drawings. Herein shows:
Fig. 1 schematically a cross-sectional view of a floating plant according to the present invention; and
Fig. 2 schematically a cross-sectional view of the water intake riser 7 of Fig. 1.

For the purpose of this description, same reference numbers refer to same or similar components.

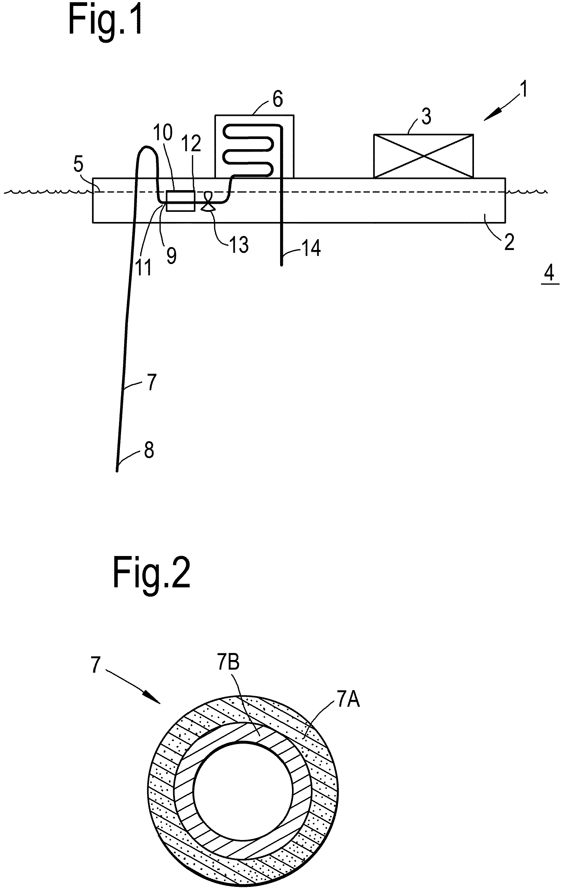

Figure 1 shows a cross-sectional view of a floating LNG plant generally referred to with reference number 1. The plant 1 comprises a floating body such as a barge 2, with a liquefaction plant 3 arranged thereon. The barge 2 is floating in seawater 4; the dashed line 5 represents the waterline. For the sake of clarity, no details of the liquefaction plant 3 are shown in Fig. 1.

The liquefaction plant 3 comprises a heat exchanger 6 in which natural gas can be cooled using seawater by indirect heat exchange. The seawater to be used in the heat exchanger 6 is provided via water intake riser 7 which suspends from the barge 2 into the sea 4. The water intake riser 7 has a seawater inlet 8 and an outlet 9 at its upper end, which outlet 9 is connected to the inlet 11 of a seawater reservoir 10 on the barge 2. The outlet 12 of the seawater reservoir 10 is connected to a pump 13 for supplying seawater to the heat exchanger 6. After use in the heat exchanger 6, the seawater is discharged via outlet 14.

In Fig. 2, a schematic cross-sectional view of the water intake riser 7 is shown. The water intake riser 7 comprises an external tubular support 7A and an internal anti-fouling coating 7B.

The person skilled in the art will readily understand that many modifications may be made without departing from the scope of the present invention.

## Claims

1. A floating plant (1) at least comprising a floating body (2) with a plant (3) arranged thereon and a water intake riser (7) for providing water to the plant (3),
wherein the water intake riser (7) is at least partially coated on the inside with an anti-fouling coating (7B).

2. The floating plant (1) according to claim 1, wherein the plant (1) is a liquefaction plant for liquefying natural gas.

3. The floating plant (1) according to claim 1 or 2, wherein the plant (1) includes a heat exchanger (6) in which a stream can be cooled using water and wherein the water intake riser (7) can provide water to be used in the heat exchanger (6).

4. The floating plant (1) according to any one of the preceding claims, wherein the water intake riser (7) is suspending from the floating body (2), preferably substantially perpendicular.

5. The floating plant (1) according to any one of the preceding claims, wherein the water intake riser (7) comprises one or more elongated tubes.

6. The floating plant (1) according to any one of the preceding claims, wherein the water intake riser (7) is at least 20 m long, preferably at least 50 m, more preferably at least 100 m.

7. The floating plant (1) according to any one of the preceding claims, wherein the anti-fouling coating (7B) is non-toxic.

8. The floating plant (1) according to any one of the preceding claims, wherein the anti-fouling coating (7B) comprises copper, in particular a copper-nickel alloy.

9. A water intake riser (7) that is at least partially coated on the inside with an anti-fouling coating (7B), as described in any one of the preceding claims.
